(19) Europäisches Patentamt
European Patent Office
Office européen des brevets

(11) EP 3 731 047 A1

(12) EUROPEAN PATENT APPLICATION

(43) Date of publication:
28.10.2020 Bulletin 2020/44

(51) Int Cl.:
G05B 19/416 (2006.01)

(21) Application number: 19179391.8

(22) Date of filing: 11.06.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 25.04.2019 CN 201910341037

(71) Applicant: New Era AI Robotic Inc.
105 Taipei City (TW)

(72) Inventors:
• LIN, Chun-Chi
Taipei City 105 (TW)
• CHU, Ka-Weng
Taipei City 105 (TW)
• CHEN, Ting-Shuo
Taipei City 105 (TW)

(74) Representative: 2K Patentanwälte Blasberg
Kewitz & Reichel
Partnerschaft mbB
Schumannstrasse 27
60325 Frankfurt am Main (DE)

(54) **CONTROL SYSTEM OF MOTOR-DRIVEN MOVEABLE PLATFORM AND METHOD OF CONTROLLING THE SAME**

(57) A control system of a motor-driven moveable platform is provided to control speed of a moveable platform (20). The control system of the motor-driven moveable platform includes a subtractor (12), a controller (14), and a signal converter (16). The subtractor (12) produces an error speed ($e_k$), the controller (14) produces a speed control signal ($c_k$), and the signal converter (16) produces a speed drive signal ($d_k$) including an accelerated drive signal ($PWM_k$) and a decelerated drive signal ($BK_k$). The accelerated drive signal ($PWM_k$) and the decelerated drive signal ($BK_k$) are provided to control acceleration and deceleration of the moveable platform (20).

10

FIG.1

**Description**

BACKGROUND OF THE INVENTION

Technical Field

The present disclosure relates to a control system of a moveable platform and a method of controlling the same, and more particularly to a control system of a motor-driven moveable platform without additional braking mechanism and a method of controlling the same.

Description of Related Art

The statements in this section merely provide background information related to the present disclosure and do not necessarily constitute prior art.

For existing robots with moveable platforms, the moveable platform is mainly driven to forward move by a motor. If the moveable platform needs to be decelerated, a braking force can be actively applied through an additional braking mechanism to brake the moveable platform. Alternatively, the moveable platform is passively decelerated without being driven by the motor. Therefore, the forward control and the deceleration control of the moveable platform are implemented. Moreover, the acceleration and deceleration control of the moveable platform with different loads is usually implemented by a human adjustment.

However, the existing problems associated with driving and controlling the moveable platform are: for the passively-decelerated moveable platform without being driven by the motor, if the actual speed of the moveable platform exceeds the target speed and needs to be decelerated, the moveable platform cannot be decelerated if no braking force provided by the additional brake mechanism. Therefore, not only the equipment costs and the maintenance costs are increased but also the control complexity is increased. Moreover, the acceleration and deceleration control of the moveable platform with different loads fails to be implemented automatically, accurately, and in real time.

SUMMARY OF THE INVENTION

An object of the present disclosure is to solve the above-mentioned problems, and therefore the present disclosure provides a control system of a motor-driven moveable platform to control speed of a moveable platform. The control system of the motor-driven moveable platform includes a subtractor, a controller, and a signal converter. The subtractor receives a reference speed and an actual speed, and calculates a speed difference value between the reference speed and the actual speed to acquire an error speed. The controller receives the error speed, the actual speed, and an absolute value of a target speed to calculate a speed control signal. The signal converter receives the speed control signal, the actual speed, and the absolute value of the target speed to calculate a speed drive signal. The speed drive signal includes an accelerated drive signal and a decelerated drive signal. The accelerated drive signal and the decelerated drive signal are provided to control acceleration and deceleration of the moveable platform.

Accordingly, the deceleration of the moveable platform can be achieved without additional braking mechanism, which reduces equipment costs and maintenance costs, and reduces control complexity, and the closed-loop speed control for the moveable platform is implemented to achieve the speed adjustment and control automatically, accurately, and in real time.

Another object of the present disclosure is to solve the above-mentioned problems, and therefore the present disclosure provides a method of controlling a motor-driven moveable platform, the method includes the steps of: (a) providing a reference speed, an actual speed, and an absolute value of a target speed, (b) providing a controller, and calculating a speed control signal by the controller according to the reference speed, the actual speed, and the absolute value of the target speed, (c) providing a signal converter, and calculating a speed drive signal by the signal converter according to the speed control signal, the actual speed, and the absolute value of the target speed, wherein the speed drive signal comprises an accelerated drive signal and a decelerated drive signal, and (d) controlling acceleration and deceleration of the moveable platform according to the accelerated drive signal and the decelerated drive signal.

Accordingly, the deceleration of the moveable platform can be achieved without additional braking mechanism, which reduces equipment costs and maintenance costs, and reduces control complexity, and the closed-loop speed control for the moveable platform is implemented to achieve the speed adjustment and control automatically, accurately, and in real time.

It is to be understood that both the foregoing general description and the following detailed description are exemplary, and are intended to provide further explanation of the present disclosure as claimed. Other advantages and features of the present disclosure will be apparent from the following description, drawings and claims.

BRIEF DESCRIPTION OF DRAWINGS

The present disclosure can be more fully understood by reading the following detailed description of the embodiment, with reference made to the accompanying drawings as follows:

FIG. 1 is a schematic view of a control system of a motor-driven moveable platform according to the present disclosure.
FIG. 2 is a schematic waveform of a reference speed according to the present disclosure.
FIG. 3 is a schematic waveform of a speed control of the motor-driven moveable platform according to the present disclosure.
FIG. 4 is a flowchart of a method of controlling the motor-driven moveable platform according to the present disclosure.

DETAILED DESCRIPTION OF THE INVENTION

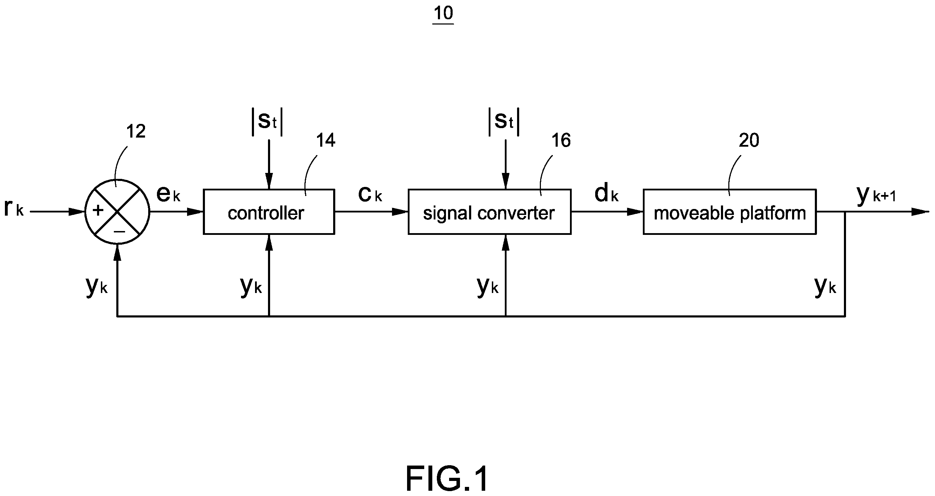

Reference will now be made to the drawing figures to describe the present disclosure in detail. It will be understood that the drawing figures and exemplified embodiments of present disclosure are not limited to the details thereof.
Please refer to FIG. 1, which shows a schematic view of a control system of a motor-driven moveable platform according to the present disclosure. The control system (hereinafter referred to "system") includes a control mechanism 10 and a moveable platform 20. The control mechanism 10 provides a closed-loop speed control for the moveable platform 20 to make the speed of the moveable platform 20 reach to the desired target speed. The control mechanism 10 includes a subtractor 12, a controller 14, and a signal converter 16. In particular, the speed control of the moveable platform 20 means that left and right wheels of the moveable platform 20 are controlled, and therefore a moveable platform having movable and controllable left and right wheels is referred to as the moveable platform 20.
An output of the system is an actual speed $y_k$ of the moveable platform 20. The actual speed $y_k$ may be detected by a speed detector (not shown), and the detected actual speed $y_k$ is transmitted to the subtractor 12, and the subtractor 12 further receives a reference speed $r_k$. In particular, the actual speed $y_k$ follows the reference speed $r_k$ for dynamic response. Specifically, the subtractor 12 receives the reference speed $r_k$ and the actual speed $y_k$, and performs a subtraction operation between the reference speed $r_k$ and the actual speed $y_k$ to acquire an error speed $e_k$, i.e., $e_k = r_k - y_k$. Therefore, if the error speed $e_k$ is positive, it means that the actual speed $y_k$ is less (slower) than the reference speed $r_k$, on the contrary, if the error speed $e_k$ is negative, it means that the actual speed $y_k$ is greater (faster) than the reference speed $r_k$. Accordingly, the controller 14 and the signal converter 16 of the control mechanism 10 are cooperated with to make the actual speed $y_k$ follow the reference speed $r_k$ for dynamic response.
Take the speed control for example, the controller 14 is a speed controller. Specifically, the controller 14 is, for example but not limited to, a proportional-integral (PI) controller, a proportional-integral-derivative (PID) controller, a fuzzy controller, a fuzzy proportional-integral controller, a fuzzy proportional-integral-derivative controller, or a programmable logic controller (PLC). In other words, a controller that provides speed control for the motor can be used as the speed controller. In particular, since the derivative control of the proportional-integral-derivative (PID) controller is particularly sensitive to high-frequency components in the input signal, the derivative control is usually omitted in practical applications to be more stable in the steady state under larger noises, i.e., the proportional-integral (PI) controller is implemented. In which, a discrete representation of the proportional-integral (PI) controller is:

$$c_k = K_P \times e_k + K_P \times \frac{T}{T_I} \times \sum_{j=0}^{k} e_j$$

In which, $c_k$ is a speed control signal calculated by the controller 14, T is a sampling time, $K_P$ is a proportional parameter, and $T_I$ is an integral parameter.
Therefore, the error speed $e_k$, the actual speed $y_k$, and the absolute value of the target speed $|S_t|$ are inputted to the proportional-integral (PI) controller to acquire the speed control signal $c_k$ by a proportional-integral operation. In particular, if the previous absolute value of the target speed is different from the current absolute value of the target speed, values of the $K_P$, $\frac{T}{T_I}$, and $\sum_{j=0}^{k} e_j$ can be adjusted according to the current acceleration and deceleration relationship.
After the speed control signal $c_k$ outputted from the controller 14 is acquired, the speed control signal $c_k$, the actual speed $y_k$, and the absolute value of the target speed $|S_t|$ are inputted to the signal converter 16 to acquire the

speed drive signal $d_k$. In particular, the speed drive signal $d_k$ can be implemented by an accelerated drive signal $PWM_k$ and a decelerated drive signal $BK_k$. In one embodiment of the present disclosure, the accelerated drive signal $PWM_k$ and the decelerated drive signal $BK_k$ of the speed drive signal $d_k$ may be defined as follows.

I. When a moving direction is the same and the actual speed $y_k$ is greater than or equal to the absolute value of the target speed $|S_t|$, i.e., $y_k \geq |S_t|$. It is assumed that the sampling time is T, a full duty cycle is $D_{full}$, and parameters $C_{max}=1$ and $C_{min}=-1$. In addition, in order to implement the speed control of the moveable platform 20 accurately and in real time under vary small or vary large difference between the actual speed $y_k$ and the absolute value of the target speed $|S_t|$, a brake standard BrakeStd is, for example but not limited to, defined as follows.

If $y_k\text{-}|S_t|>\dfrac{1}{4}\times(\text{maximum speed})$ is satisfied, BrakeStd=64. If $y_k\text{-}|S_t|>\dfrac{1}{4}\times(\text{maximum speed})$ is not satisfied, BrakeStd=8.

In which, the maximum speed is assumed to be 5850 rpm.

If the speed is normalized, i.e., the maximum speed is to be 1, then: If $y_k\text{-}|S_t|>\dfrac{1}{4}$ is satisfied, BrakeStd=64.

If $y_k\text{-}|S_t|>\dfrac{1}{4}$ is not satisfied, BrakeStd=8.

Therefore, the accelerated drive signal $PWM_k$ and the decelerated drive signal $BK_k$ of the speed drive signal $d_k$ may be defined according to the speed control signal $c_k$ as follows.

1. if $C_{max} < c_k$ : $PWM_k = D_{full}$ and $BK_k = 0.$

2. if $C_{max} \geq c_k \geq 0$, three conditions could be divided as follows.

(1) if $c_k - c_{k\text{-}1} < C_{min}$ : $PWM_k = 0$ and $BK_k = T.$

(2) if $C_{min} \leq c_k - c_{k\text{-}1} < \dfrac{C_{min}}{\text{BrakeStd}}$ : $PWM_k = 0$ and $BK_k = T \times \dfrac{c_k - c_{k\text{-}1}}{C_{min}}.$

(3) if $c_k - c_{k\text{-}1} \geq \dfrac{C_{min}}{\text{BrakeStd}}$ : $PWM_k = D_{full} \times \dfrac{c_k}{C_{max}}$ and $BK_k = 0.$

3. if $0>c_k \geq C_{min}$ : $PWM_k = 0$ and $BK_k = T \times \dfrac{c_k}{C_{min}}.$

4. if $C_{min} > c_k$ : $PWM_k = 0$ and $BK_k = T.$

For example, under the above-mentioned conditions, i.e., the moving direction is the same and the actual speed $y_k$ is greater than or equal to the absolute value of the target speed $|S_t|$, if $C_{max} < c_k$, it means that the speed control signal $c_k$ provides a fully acceleration control, and therefore $PWM_k = D_{full}$ and $BK_k = 0$ of the speed drive signal $d_k$ outputted from the signal converter 16. At this condition, the moveable platform 20 is controlled to accelerate with the maximum acceleration capacity without braking. For example, under the above-mentioned conditions, i.e., the moving direction is the same and the actual speed $y_k$ is greater than or equal to the absolute value of the target speed $|S_t|$, if $C_{max} \geq c_k \geq 0$ and $c_k - c_{k\text{-}1} < C_{min}$, it means that the speed control signal $c_k$ provides a fully deceleration (brake) control, and therefore $PWM_k = 0$ and $BK_k = T$ of the speed drive signal $d_k$. At this condition, the moveable platform 20 is controlled to decelerate during the sampling time T, such as 40 milliseconds. For example, under the above-mentioned conditions, i.e., the moving direction is the same and the actual speed $y_k$ is greater than or equal to the absolute value of the target

speed $|S_t|$, if $C_{max} \geq c_k \geq 0$ and $C_{min} \leq c_k - c_{k\text{-}1} < \dfrac{C_{min}}{\text{BrakeStd}}$, it means that the speed control signal $c_k$ provides

an intermittent deceleration (brake) control, and the time length of each brake deceleration is a proportion of the sampling time T, in which the proportion is equal to $\dfrac{c_k - c_{k\text{-}1}}{C_{min}}$.

That is, the time length of each brake deceleration is determined according to previous and next two speed control signals, i.e., $c_{k\text{-}1}$ and $c_k$. Therefore, if a difference between the previous and next two speed control signals is greater, the time length of each brake deceleration of the moveable platform 20 is longer. For example, under the above-mentioned conditions, i.e., the moving direction is the same and the actual speed $y_k$ is greater than or equal to the absolute value of the tar et speed $|S_t|$, if $C_{max} \geq c_k \geq 0$ and $c_k - c_{k-1} \geq \dfrac{C_{min}}{BrakeStd}$, it means that the speed control signal $c_k$ provides a non-fully acceleration control, and an acceleration degree is a proportion of the fully acceleration (i.e., the full duty cycle $D_{full}$), in which the proportion is equal to $\dfrac{c_k}{C_{max}}$. That is, the acceleration degree is determined according to the speed control signal $c_k$. Therefore, if the speed control signal $c_k$ is greater, the acceleration degree of the moveable platform 20 is greater.

For example, under the above-mentioned conditions, i.e., the moving direction is the same and the actual speed $y_k$ is greater than or equal to the absolute value of the target speed $|S_t|$, if $0 > c_k \geq C_{min}$, it means that the speed control signal $c_k$ provides an intermittent deceleration (brake) control, and the time length of each brake deceleration is a proportion of the sampling time T, in which the proportion is equal to $\dfrac{c_k}{C_{min}}$. That is, the time length of each brake deceleration is determined according to speed control signal $c_k$. For example, under the above-mentioned conditions, i.e., the moving direction is the same and the actual speed $y_k$ is greater than or equal to the absolute value of the target speed $|S_t|$, if $C_{min} > c_k$, it means that the speed control signal $c_k$ provides a fully deceleration (brake) control for the moveable platform 20, and therefore $PWM_k = 0$ and $BK_k = T$ of the speed drive signal $d_k$. At this condition, the moveable platform 20 is controlled to decelerate during the sampling time T, such as 40 milliseconds.

II. When the moving direction is the same and the actual speed $y_k$ is less than the absolute value of the target speed $|S_t|$, i.e., $y_k < |S_t|$. It is assumed that the sampling time is T, the full duty cycle is $D_{full}$, parameters $C_{max} = 1$ and $C_{min} = -1$, and brake standard is BrakeStd. Therefore, the accelerated drive signal $PWM_k$ and the decelerated drive signal $BK_k$ of the speed drive signal $d_k$ may be defined according to the speed control signal $c_k$ as follows.

1. if $C_{max} < c_k$ : $PWM_k = D_{full}$ and $BK_k = 0$.

2. if $C_{max} \geq c_k \geq 0$, three conditions could be divided as follows.

   (1) if $c_k - c_{k-1} < C_{min}$ : $PWM_k = 0$ and $BK_k = 0$.

   (2) if $C_{min} \leq c_k - c_{k-1} < \dfrac{C_{min}}{BrakeStd}$ : $PWM_k = 0$ and $BK_k = 0$.

   (3) if $c_k - c_{k-1} \geq \dfrac{C_{min}}{BrakeStd}$ : $PWM_k = D_{full} \times \dfrac{c_k}{C_{max}}$ and $BK_k = 0$.

3. if $0 > c_k \geq C_{min}$ : $PWM_k = 0$ and $BK_k = 0$.

4. if $C_{min} > c_k$ : $PWM_k = 0$ and $BK_k = 0$.

Since the major difference between the second control condition (II) and the first control condition (I) is that the actual speed $y_k$ is less than the absolute value of the target speed $|S_t|$ in the former, the detail description is omitted here for conciseness. In particular, in the second control condition (II), the decelerated drive signals $BK_k$ of the speed drive signal $d_k$ are zero, and the accelerated drive signals $PWM_k$ of the speed drive signal $d_k$ are the same as those in the first control condition (I).

Accordingly, the acceleration and deceleration control of the forward and reverse of the moveable platform 20 can be implemented by combination and adjustment of the accelerated drive signal $PWM_k$ and the decelerated drive signal $BK_k$. In particular, the function of the accelerated drive signal $PWM_k$ is equivalent to the concept of an accelerator, and the function of the decelerated drive signal $BK_k$ is equivalent to the concept of a brake. If the moveable platform 20 is driven by a brushless DC (BLDC) motor, the accelerated drive signal $PWM_k$ is provided to control a PWM pin of a motor driver board, and the decelerated drive signal $BK_k$ is provided to control a Start/Brake pin of the motor driver board. Therefore, the acceleration and deceleration control of the forward and reverse of the moveable platform 20 can be implemented, and the moveable platform 20 with different loads can be automatically and stably controlled.

Moreover, according to different processing abilities of the hardware, the number of braking may be controllable by designing the decelerated drive signal $BK_k$ in a manner of unconditional carry to a multiple of the controllable braking time, such as 5 milliseconds. Moreover, if the actual speed $y_k$ is less than a minimum controllable speed and the absolute value of the target speed $|S_t|$ is zero, the accelerated drive signal $PWM_k$ is set to zero and the decelerated drive signal

$BK_k$ is set to T. Afterward, the control mechanism of the controller 14 is reset. Until the absolute value of the target speed $|S_t|$ is not zero, the control mechanism of the controller 14 is restarted. At this condition, the signal converter 16 converts the speed control signal $c_k$ to acquire the accelerated drive signal $PWM_k$ and the decelerated drive signal $BK_k$ of the speed drive signal $d_k$, and therefore the moveable platform 20 is driven to acquire the next actual speed $y_{k+1}$. In other words, the next actual speed $y_{k+1}$ can be acquired by sampling the speed result outputted from the system after the reference speed $r_k$ is inputted and the sampling time T is expired. Finally, the closed-loop speed control is performed for the moveable platform 20 to make the speed of the moveable platform 20 reach to the desired target speed.

For example, it is assumed that the sampling time T is 40 milliseconds, which can be determined by specifications of the selected microcontroller, a pole number of the BLDC motor is 14, a minimum average speed parameter of the BLDC motor is 4, and therefore the minimum controllable speed is: $\frac{60000}{40} \times \frac{4}{14} = 428.57$ (rpm). Further, a minimum

controllable speed of the wheel is 477.17 (0.01cm/s) according to size specifications of the wheel, such as a diameter of the wheel.

If other types of motors are driven, similar or identical functions like the PWM pin and/or the Start/Brake pin of the motor driver board can be cooperated with the accelerated drive signal $PWM_k$ and the decelerated drive signal $BK_k$ to control the speed of the motor. Take the general brushed DC motor for example, the brake deceleration control can be implemented through shorting positive and negative terminals by external circuits, and the acceleration control can be implemented by the PWM signal. Take the stepper motor for example, the brake deceleration control can be implemented by gradually increasing the time of fixed position, and the acceleration control can be implemented by gradually decreasing the time of fixed position.

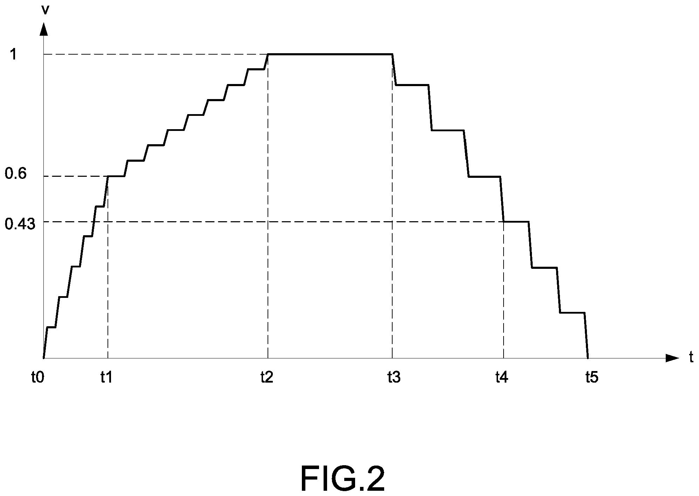

Please refer to FIG. 2, which shows a schematic waveform of a reference speed according to the present disclosure. The abscissa is time and the ordinate is speed value, and the speed value is normalized and therefore the maximum speed, such as 5850 rpm is equal to 1. From a time point t0 to a time point t1, the moveable platform 20 is accelerated under a no-loading condition. From the time point t1 to a time point t2, the moveable platform 20 is accelerated under a loading condition. The load is added on the moveable platform 20 at the time point t1. In other words, if no load is added at the time point t1, the reference speed $r_k$ still provides the same acceleration control as from the time point t0 to the time point t1. In particular, the time between two steps of the reference speed $r_k$ under the no-loading condition is shorter than that under the loading condition. From the time point t2 to a time point t3, the moveable platform 20 is driven under the target speed. From the time point t3 to a time point t4, the moveable platform 20 is decelerated under the loading condition, and from the time point t4 to a time point t5, the moveable platform 20 is decelerated under the no-loading condition. The load is removed from the moveable platform 20 at the time point t4. In other words, if the load is not removed at the time point t4, the reference speed $r_k$ still provides the same deceleration control as from the time point t3 to the time point t4. In particular, the time between two steps of the reference speed $r_k$ under the no-loading condition is shorter than that under the loading condition.

The change of the reference speed $r_k$ from the time point t0 to the time point t5 indicates the acceleration control and the deceleration control in the same direction. Correspondingly, if the moveable platform 20 is decelerated from the target speed (at the time point t3) to be stationary (at the time point t5) and then to be accelerated in the opposite direction, the reference speed $r_k$ shown in FIG. 2 can still the acceleration control and the deceleration control of the moveable platform 20, the detail description is omitted here for conciseness.

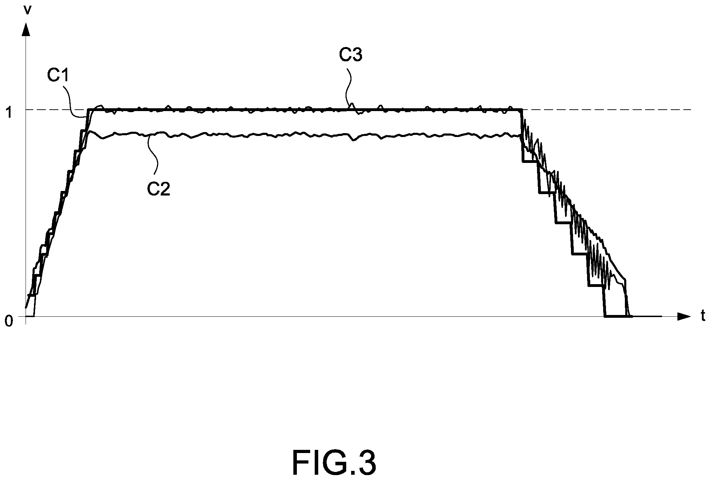

Please refer to FIG. 3, which shows a schematic waveform of a speed control of the motor-driven moveable platform according to the present disclosure. FIG. 3 shows three waveforms including a first waveform C1 of the reference speed $r_k$, a second waveform C2 of the speed control signal $c_k$, and a third waveform C3 of the actual speed $y_k$. As mentioned in FIG. 1, the reference speed $r_k$ provides speed control requirements for the moveable platform 20. Further, the controller 14 is used to execute such as a proportional-integral operation to produce the speed control signal $c_k$. Further, the signal converter 16 is used to convert the speed control signal $c_k$ to acquire the corresponding accelerated drive signal $PWM_k$ and the decelerated drive signal $BK_k$, thereby providing a closed-loop speed control for the moveable platform 20. Accordingly, the actual speed $y_k$ follows the reference speed $r_k$ for dynamic response to make the speed of the moveable platform 20 reach to the desired target speed.

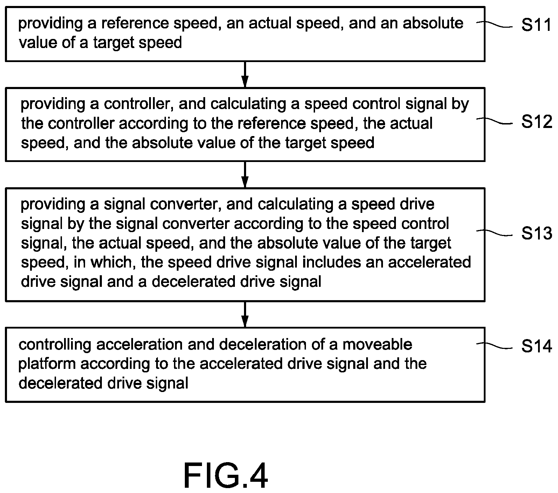

Please refer to FIG. 4, which shows a flowchart of a method of controlling the motor-driven moveable platform according to the present disclosure. The control method includes the steps as follows. First, providing a reference speed $r_k$, an actual speed $y_k$, and an absolute value of a target speed $|S_t|$ (S11). In which, the actual speed $y_k$ of the moveable platform 20 may be detected by a speed sensor, and the reference speed $r_k$ provides speed control requirements for the moveable platform 20.

Please refer to FIG. 4, which shows a flowchart of a method of controlling the motor-driven moveable platform according to the present disclosure. The control method includes the steps as follows. First, providing a reference speed $r_k$, an actual speed $y_k$, and an absolute value of a target speed $|S_t|$ (S11). In which, the actual speed $y_k$ of the moveable platform 20 may be detected by a speed sensor, and the reference speed $r_k$ provides speed control requirements for the moveable platform 20.

Afterward, providing a controller 14, and calculating a speed control signal $c_k$ by the controller 14 according to the reference speed $r_k$, the actual speed $y_k$, and the absolute value of the target speed $|S_t|$ (S12). In which, the controller 14 is, for example but not limited to, a proportional-integral (PI) controller, a proportional-integral-derivative (PID) controller, a fuzzy controller, a fuzzy proportional-integral controller, a fuzzy proportional-integral-derivative controller, or a programmable logic controller (PLC). Specifically, a subtraction operation between the reference speed $r_k$ and the actual speed $y_k$ is performed to acquire an error speed $e_k$, i.e., $e_k = r_k - y_k$. Further, the error speed $e_k$, the actual speed $y_k$, and the absolute value of the target speed $|S_t|$ are provided to the controller 14 to calculate the speed control signal $c_k$ through a proportional-integral operation by the controller 14 (take the proportional-integral (PI) controller as an example).

Afterward, providing a signal converter 16, and calculating a speed drive signal $d_k$ by the signal converter 16 according to the speed control signal $c_k$, the actual speed $y_k$, and the absolute value of the target speed $|S_t|$. In which, the speed drive signal $d_k$ includes an accelerated drive signal $PWM_k$ and a decelerated drive signal $BK_k$ (S13). After acquiring the speed control signal $c_k$ outputted from the controller 14, the signal converter 16 calculates the speed drive signal $d_k$ according to the received speed control signal $c_k$, the actual speed $y_k$, and the absolute value of the target speed $|S_t|$. Finally, controlling acceleration and deceleration of the moveable platform 20 according to the accelerated drive signal $PWM_k$ and the decelerated drive signal $BK_k$ (S14). The accelerated drive signal $PWM_k$ can be adjusted to 0, full duty cycle (maximum duty cycle) $D_{full}$, or a proportion of the full duty cycle $D_{full}$. The decelerated drive signal $BK_k$ can be adjusted to 0, sampling time T, or a proportion of the sampling time T. Therefore, the speed control of the moveable platform 20 can be implemented accurately and in real time.

In conclusion, the present disclosure has following features and advantages:

1. The deceleration of the moveable platform can be achieved without additional braking mechanism, which reduces equipment costs and maintenance costs, and reduces control complexity.
2. The closed-loop speed control for the moveable platform is implemented to achieve the speed adjustment and control automatically, accurately, and in real time.

**Claims**

1. A control system of a motor-driven moveable platform configured to control speed of a moveable platform (20), **characterized in that** the control system of a motor-driven moveable platform comprising:

   a subtractor (12) configured to receive a reference speed ($r_k$) and an actual speed ($y_k$), and calculate a speed difference value between the reference speed ($r_k$) and the actual speed ($y_k$) to acquire an error speed ($e_k$),
   a controller (14) configured to receive the error speed ($e_k$), the actual speed ($y_k$), and an absolute value of a target speed ($|S_t|$) to calculate a speed control signal ($c_k$), and
   a signal converter (16) configured to receive the speed control signal ($c_k$), the actual speed ($y_k$), and the absolute value of the target speed ($|S_t|$) to calculate a speed drive signal ($d_k$), wherein the speed drive signal ($d_k$) comprises an accelerated drive signal ($PWM_k$) and a decelerated drive signal ($BK_k$),
   wherein the accelerated drive signal ($PWM_k$) and the decelerated drive signal ($BK_k$) are provided to control acceleration and deceleration of the moveable platform (20).

2. The control system of the motor-driven moveable platform in claim 1, wherein when a moving direction of the moveable platform (20) is the same and the actual speed ($y_k$) is greater than or equal to the absolute value of the target speed ($|S_t|$), the accelerated drive signal ($PWM_k$) and the decelerated drive signal ($BK_k$) are defined:

$$\text{if } C_{max} < c_k \; : \; PWM_k = D_{full} \text{ and } BK_k = 0,$$

$$\text{if } C_{max} \geq c_k \geq 0,$$

and

$$\text{if } c_k - c_{k-1} < C_{min} \; : \; PWM_k = 0 \text{ and } BK_k = T,$$

$$\text{if } C_{min} \le c_k - c_{k-1} < \frac{C_{min}}{BrakeStd} \; : \; PWM_k = 0 \; \text{ and } \; BK_k = T \times \frac{c_k - c_{k-1}}{C_{min}},$$

$$\text{if } c_k - c_{k-1} \ge \frac{C_{min}}{BrakeStd} \; : \; PWM_k = D_{full} \times \frac{c_k}{C_{max}} \; \text{ and } \; BK_k = 0,$$

$$\text{if } 0 > c_k \ge C_{min} \; : \; PWM_k = 0 \; \text{ and } \; BK_k = T \times \frac{c_k}{C_{min}},$$

$$\text{if } C_{min} > c_k \; : \; PWM_k = 0 \; \text{ and } \; BK_k = T,$$

wherein $PWM_k$ is the accelerated drive signal, $BK_k$ is the decelerated drive signal, $D_{full}$ is a full duty cycle, T is a sampling time, $c_k$ and $c_{k-1}$ are the speed control signals, $C_{max}$ is maximum speed parameter and equal to 1, $C_{min}$ is minimum speed parameter and equal to -1, and BrakeStd is a brake standard.

3. The control system of the motor-driven moveable platform in claim 1, wherein when a moving direction of the moveable platform (20) is the same and the actual speed ($y_k$) is less than the absolute value of the target speed ($|S_t|$), the accelerated drive signal ($PWM_k$) and the decelerated drive signal ($BK_k$) are defined:

$$\text{if } C_{max} < c_k \; : \; PWM_k = D_{full} \; \text{ and } \; BK_k = 0,$$

$$\text{if } C_{max} \ge c_k \ge 0,$$

and

$$\text{if } c_k - c_{k-1} < C_{min} \; : \; PWM_k = 0 \; \text{ and } \; BK_k = 0,$$

$$\text{if } C_{min} \le c_k - c_{k-1} < \frac{C_{min}}{BrakeStd} \; : \; PWM_k = 0 \; \text{ and } \; BK_k = 0,$$

$$\text{if } c_k - c_{k-1} \ge \frac{C_{min}}{BrakeStd} \; : \; PWM_k = D_{full} \times \frac{c_k}{C_{max}} \; \text{ and } \; BK_k = 0,$$

$$\text{if } 0 > c_k \ge C_{min} \; : \; PWM_k = 0 \; \text{ and } \; BK_k = 0,$$

$$\text{if } C_{min} > c_k \; : \; PWM_k = 0 \; \text{ and } \; BK_k = 0,$$

wherein $PWM_k$ is the accelerated drive signal, $BK_k$ is the decelerated drive signal, $D_{full}$ is a full duty cycle, T is a sampling time, $c_k$ and $c_{k-1}$ are the speed control signals, $C_{max}$ is maximum speed parameter and equal to 1, $C_{min}$ is minimum speed parameter and equal to -1, and BrakeStd is a brake standard.

4. The control system of the motor-driven moveable platform in claim 2 or claim 3, wherein the brake standard is determined according to the actual speed ($y_k$), the absolute value of the target speed ($|S_t|$), and a maximum speed.

5. The control system of the motor-driven moveable platform in claim 4, wherein:

if $y_k - |S_t| > \frac{1}{4} \times v_{max}$ is satisfied, the brake standard (BrakeStd) is a first brake parameter,

if $y_k - |S_t| > \frac{1}{4} \times v_{max}$ is not satisfied, the brake standard (BrakeStd) is a second brake parameter, wherein the first brake parameter is greater than the second brake parameter,
wherein $y_k$ is the actual speed, $|S_t|$ is the absolute value of the target speed, and $v_{max}$ is the maximum speed.

6. The control system of the motor-driven moveable platform in claim 2 or claim 3, wherein when the moveable platform (20) is driven by a brushless DC motor, the accelerated drive signal ($PWM_k$) is provided to control a PWM pin of a motor driver board, and the decelerated drive signal ($BK_k$) is provided to control a Start/Brake pin of the motor driver board.

7. The control system of the motor-driven moveable platform in claim 1, wherein if the actual speed ($y_k$) is less than a minimum controllable speed and the absolute value of the target speed ($|S_t|$) is zero, the accelerated drive signal ($PWM_k$) and the decelerated drive signal ($BK_k$) are defined:

$PWM_k = 0$ and $BK_k = T$,
wherein $PWM_k$ is the accelerated drive signal, $BK_k$ is the decelerated drive signal, and T is the sampling time.

8. The control system of the motor-driven moveable platform in claim 1, wherein the controller (14) is a proportional-integral controller, a proportional-integral-derivative controller, a fuzzy controller, a fuzzy proportional-integral controller, a fuzzy proportional-integral-derivative controller, or a programmable logic controller.

9. A method of controlling a motor-driven moveable platform, **characterized in that** the method comprising the steps of:

(a) providing a reference speed ($r_k$), an actual speed ($y_k$), and an absolute value of a target speed ($|S_t|$),
(b) providing a controller (14), and calculating a speed control signal ($c_k$) by the controller (14) according to the reference speed ($r_k$), the actual speed ($y_k$), and the absolute value of the target speed ($|S_t|$),
(c) providing a signal converter (16), and calculating a speed drive signal ($d_k$) by the signal converter (16) according to the speed control signal ($c_k$), the actual speed ($y_k$), and the absolute value of the target speed ($|S_t|$), wherein the speed drive signal ($d_k$) comprises an accelerated drive signal ($PWM_k$) and a decelerated drive signal ($BK_k$), and
(d) controlling acceleration and deceleration of a moveable platform (20) according to the accelerated drive signal ($PWM_k$) and the decelerated drive signal ($BK_k$).

10. The method of controlling the motor-driven moveable platform in claim 9, wherein the step (b) further comprises:
acquiring an error speed ($e_k$) by calculating a speed difference value between the reference speed ($r_k$) and the actual speed ($y_k$).

11. The method of controlling the motor-driven moveable platform in claim 9, wherein the step (d) further comprises:

when a moving direction of the moveable platform (20) is the same and the actual speed ($y_k$) is greater than or equal to the absolute value of the target speed ($|S_t|$), the accelerated drive signal ($PWM_k$) and the decelerated drive signal ($BK_k$) are defined:

$$if \ C_{max} < c_k \ : \ PWM_k = D_{full} \ and \ BK_k = 0,$$

$$if \ C_{max} \geq c_k \geq 0,$$

and

$$\text{if } c_k - c_{k-1} < C_{min} \;:\; PWM_k = 0 \text{ and } BK_k = T,$$

$$\text{if } C_{min} \leq c_k - c_{k-1} < \frac{C_{min}}{BrakeStd} \;:\; PWM_k = 0 \text{ and } BK_k = T \times \frac{c_k - c_{k-1}}{C_{min}},$$

$$\text{if } c_k - c_{k-1} \geq \frac{C_{min}}{BrakeStd} \;:\; PWM_k = D_{full} \times \frac{c_k}{C_{max}} \text{ and } BK_k = 0,$$

$$\text{if } 0 > c_k \geq C_{min} \;:\; PWM_k = 0 \text{ and } BK_k = T \times \frac{c_k}{C_{min}},$$

$$\text{if } C_{min} > c_k \;:\; PWM_k = 0 \text{ and } BK_k = T,$$

wherein $PWM_k$ is the accelerated drive signal, $BK_k$ is the decelerated drive signal, $D_{full}$ is a full duty cycle, T is a sampling time, $c_k$ and $c_{k-1}$ are the speed control signals, $C_{max}$ is maximum speed parameter and equal to 1, $C_{min}$ is minimum speed parameter and equal to -1, and BrakeStd is a brake standard.

12. The method of controlling the motor-driven moveable platform in claim 9, wherein the step (d) further comprises:

when a moving direction of the moveable platform (20) is the same and the actual speed ($y_k$) is less than the absolute value of the target speed ($|S_t|$), the accelerated drive signal ($PWM_k$) and the decelerated drive signal ($BK_k$) are defined:

$$\text{if } C_{max} < c_k \;:\; PWM_k = D_{full} \text{ and } BK_k = 0,$$

$$\text{if } C_{max} \geq c_k \geq 0,$$

and

$$\text{if } c_k - c_{k-1} < C_{min} \;:\; PWM_k = 0 \text{ and } BK_k = 0,$$

$$\text{if } C_{min} \leq c_k - c_{k-1} < \frac{C_{min}}{BrakeStd} \;:\; PWM_k = 0 \text{ and } BK_k = 0,$$

$$\text{if } c_k - c_{k-1} \geq \frac{C_{min}}{BrakeStd} \;:\; PWM_k = D_{full} \times \frac{c_k}{C_{max}} \text{ and } BK_k = 0,$$

$$\text{if } 0 > c_k \geq C_{min} \;:\; PWM_k = 0 \text{ and } BK_k = 0,$$

$$\text{if } C_{min} > c_k \;:\; PWM_k = 0 \text{ and } BK_k = 0,$$

wherein $PWM_k$ is the accelerated drive signal, $BK_k$ is the decelerated drive signal, $D_{full}$ is a full duty cycle, T is a sampling time, $c_k$ and $c_{k-1}$ are the speed control signals, $C_{max}$ is maximum speed parameter and equal to 1, $C_{min}$ is minimum speed parameter and equal to -1, and BrakeStd is a brake standard.

13. The method of controlling the motor-driven moveable platform in claim 11 or claim 12, wherein the step (d) further comprises:
determining the brake standard (BrakeStd) according to the actual speed ($y_k$), the absolute value of the target speed ($|S_t|$), and a maximum speed.

14. The method of controlling the motor-driven moveable platform in claim 13, wherein the step (d) further comprises:

determining the brake standard (BrakeStd) is a first brake parameter if $y_k - |S_t| > \frac{1}{4} \times v_{max}$ is satisfied,

determining the brake standard (BrakeStd) is a second brake parameter if $y_k - |S_t| > \frac{1}{4} \times v_{max}$ is not satisfied, wherein the first brake parameter is greater than the second brake parameter,
wherein $y_k$ is the actual speed, $|S_t|$ is the absolute value of the target speed, and $v_{max}$ is the maximum speed.

15. The method of controlling the motor-driven moveable platform in claim 9, wherein the step (d) further comprises:

determining the accelerated drive signal ($PWM_k$) and the decelerated drive signal ($BK_k$): $PWM_k = 0$ and $BK_k = T$ if the actual speed ($y_k$) is less than a minimum controllable speed and the absolute value of the target speed ($|S_t|$) is zero,
wherein $PWM_k$ is the accelerated drive signal, $BK_k$ is the decelerated drive signal, and T is the sampling time.

$\underline{10}$

$r_k \longrightarrow$ $\underset{12}{\oplus}$ $\xrightarrow{e_k}$ $\underset{14}{\boxed{\text{controller}}}$ $\xrightarrow{c_k}$ $\underset{16}{\boxed{\text{signal converter}}}$ $\xrightarrow{d_k}$ $\underset{20}{\boxed{\text{moveable platform}}}$ $\xrightarrow{y_{k+1}}$

$|s_t|$  $|s_t|$

$y_k$  $y_k$  $y_k$  $y_k$

FIG.1

FIG.2

FIG.3

EP 3 731 047 A1

providing a reference speed, an actual speed, and an absolute value of a target speed — S11

↓

providing a controller, and calculating a speed control signal by the controller according to the reference speed, the actual speed, and the absolute value of the target speed — S12

↓

providing a signal converter, and calculating a speed drive signal by the signal converter according to the speed control signal, the actual speed, and the absolute value of the target speed, in which, the speed drive signal includes an accelerated drive signal and a decelerated drive signal — S13

↓

controlling acceleration and deceleration of a moveable platform according to the accelerated drive signal and the decelerated drive signal — S14

FIG.4

Europäisches
Patentamt
European
Patent Office
Office européen
des brevets

# EUROPEAN SEARCH REPORT

Application Number

EP 19 17 9391

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Zhenhua Pan ET AL: "ZHENHUA PAN et al: An Intelligent Vehicle Based on an Improved PID Speed Control Algorithm for Driving Trend Graphs", , 31 December 2016 (2016-12-31), pages 19.1-19.7, XP055656070, United Kingdom DOI: 10.5013/IJSSST.a.17.30.19 Retrieved from the Internet: URL:http://ijssst.info/Vol-17/No-30/paper19.pdf [retrieved on 2020-01-09] * abstract * * page 19.4; figure Fig.2 * ----- | 1,7-10, 15 | INV. G05B19/416 |
| A | MAURICIO MARCANO ET AL: "Low Speed Longitudinal Control Algorithms for Automated Vehicles in Simulation and Real Platforms", COMPLEXITY., vol. 2018, 29 March 2018 (2018-03-29), pages 1-12, XP055656060, US ISSN: 1076-2787, DOI: 10.1155/2018/7615123 * the whole document * ----- | 1-9 | |

TECHNICAL FIELDS SEARCHED (IPC)

G05B

The present search report has been drawn up for all claims

| Place of search | Date of completion of the search | Examiner |
|---|---|---|
| The Hague | 22 January 2020 | De Porcellinis, S |